(19) Europäisches Patentamt
European Patent Office
Office européen des brevets

(11) EP 3 795 603 A1

(12) EUROPEAN PATENT APPLICATION
published in accordance with Art. 153(4) EPC

(43) Date of publication:
24.03.2021 Bulletin 2021/12

(21) Application number: 19804441.4

(22) Date of filing: 14.05.2019

(51) Int Cl.:
*C08G 18/44* (2006.01) *C08G 18/08* (2006.01)
*C08G 18/73* (2006.01) *C09D 175/04* (2006.01)
*D06N 3/14* (2006.01)

(86) International application number:
PCT/JP2019/019013

(87) International publication number:
WO 2019/221088 (21.11.2019 Gazette 2019/47)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 14.05.2018 JP 2018092938

(71) Applicant: DAINICHISEIKA COLOR & CHEMICALS MFG. CO., LTD.
Chuo-ku
Tokyo 103-8383 (JP)

(72) Inventors:
- NAMURA, Mikiyoshi
Tokyo 103-8383 (JP)
- INOU, Ryouhei
Tokyo 103-8383 (JP)
- FUKUI, Katsuyuki
Tokyo 103-8383 (JP)
- SASAKI, Kazuya
Tokyo 103-8383 (JP)

(74) Representative: Vossius & Partner
Patentanwälte Rechtsanwälte mbB
Siebertstrasse 3
81675 München (DE)

# (54) POLYURETHANE RESIN, PAINT, STRUCTURE, AND ARTICLE

(57) Disclosed is a polyurethane resin containing a polyol component and an isocyanate component, wherein (1) the polyol component contains a polycarbonate diol component, and the isocyanate component contains a linear aliphatic isocyanate, (2) the polycarbonate diol component has a number-average molecular weight of 500 to 3000, and contains a diol-derived structure having 3 to 10 carbon atoms in the structure thereof, and (3) 10 mol% or more of the isocyanate component is a linear aliphatic isocyanate component having 4 to 10 carbon atoms.

EP 3 795 603 A1

## Description

### Technical Field

The present invention relates to a polyurethane resin, a paint, a structure, and an article.

### Background Art

A polyurethane resin is excellent in various properties such as wear resistance, flexibility, bendability, softness, processability, adhesiveness and chemical resistance, and also excellent in applicability to various processing methods, and is therefore widely used as a binder for materials for synthetic artificial leathers (inclusive term for artificial leathers and synthetic leathers), various coating agents, inks and paints, and also as films, sheets and various molding materials, and polyurethane resins suitable to various uses have been proposed.

For example, in a production process for a leather-like sheet for synthetic artificial leathers, a film formed of a urethane resin composition is used for the purpose of improving texture. In particular, for use for long-term durable hard goods such as vehicle interior materials, a polycarbonate polyol is generally used as a polyol for use in synthesis of urethane resin (for example, see PTL 1).

### Citation List

### Patent Literature

PTL 1: JP 2013-108196 A

### Summary of Invention

### Technical Problem

However, when a polycarbonate polyol is merely simply used, the lightfastness of the resultant leather-like sheet could be excellent but the flexibility thereof may lower.

In particular, a material having excellent flexibility in a cold area, namely excellent cold-resistant flexibility could not be found out as yet.

In that way, flexibility in a cold area (cold-resistant flexibility) is desired, but on the other hand, for example, when cold-resistant flexibility of a soft material such as a synthetic artificial leather is improved, then chemical resistance thereof worsens. This is because chemicals may readily penetrate into the resin skeleton that has some influence on improvement of flexibility, and cold-resistant flexibility and chemical resistance are in a trade-off relation therebetween. Namely, it is difficult to satisfy both the two.

From the above, the present invention provides a polyurethane resin capable of satisfying both excellent cold-resistance flexibility and chemical resistance.

### Solution to Problem

As a result of assiduous studies, the present inventors have found that a polyurethane resin, which uses a polycarbonate diol having a specific number-average molecular weight and a specific structure and contains a specific amount of a linear aliphatic isocyanate component having 4 to 10 carbon atoms in the isocyanate component thereof, can solve the above-mentioned problems, and have completed the present invention. Specifically, the present invention is as described below.

[1] A polyurethane resin containing a polyol component and an isocyanate component, and satisfying the following (1) to (3):

(1) The polyol component contains a polycarbonate diol component, and the isocyanate component contains a linear aliphatic isocyanate;
(2) The polycarbonate diol component has a number-average molecular weight of 500 to 3000, and contains a diol-derived structure having 3 to 10 carbon atoms in the structure thereof; and
(3) 10 mol% or more of the isocyanate component is a linear aliphatic isocyanate component having 4 to 10 carbon atoms.

[2] The polyurethane resin according to [1], containing a compound component having one or more active hydrogen groups and having a hydrophilic group, and which has an acid value of 5 to 40 mgKOH/g.
[3] The polyurethane resin according to [1] or [2], wherein the proportion of the polycarbonate diol component in the polyol component is 50% by mass or more.
[4] The polyurethane resin according to any of [1] to [3], wherein the proportion of the linear aliphatic isocyanate component having 4 to 10 carbon atoms in the isocyanate component is 15 mol% or more.
[5] The polyurethane resin according to any of [1] to [4], further containing a short-chain diol component and/or a short-chain diamine component.
[6] The polyurethane resin according to any of [1] to [5], wherein at least one selected from the group consisting of the polyol component, the isocyanate component, the short-chain diol component and the short-chain diamine component is composed of a plant based raw material.
[7] The polyurethane resin according to [5] or [6], wherein the proportion as a molar ratio of the short-chain diol component is 0.1 to 3 times the amount of the polyol component.
[8] The polyurethane resin according to any of [1] to [7], wherein the glass transition temperature of the polyurethane resin is -50 to -10°C.
[9] The polyurethane resin according to any of [1] to [8], wherein a maximum value of tan$\delta$ of the polyurethane resin falls within a temperature range of -40 to - 10°C.
[10] The polyurethane resin according to any of [1] to [9], wherein, when the resin is formed into a film, a physical property value of 100% modulus at -10°C of the resultant film is 20 MPa or less.
[11] The polyurethane resin according to any of [1] to [10], wherein, when the resin is formed into a film, a 100% modulus retention rate of the resultant film after immersed in olefinic acid at 70°C for 24 hours is 20% or more.
[12] A paint containing the polyurethane resin of any of [1] to [11],
[13] The paint according to [12], further containing at least one selected from the group consisting of an isocyanate-based crosslinking agent, a carbodiimide-based crosslinking agent, an oxazoline-based crosslinking agent, and an epoxy-based crosslinking agent.
[14] A structure including the polyurethane resin of any of [1] to [11].
[15] A structure including the paint of [12] or [13] in at least any of the surface or the inside thereof.
[16] A synthetic artificial leather including the structure of [14] or [15].

Advantageous Effects of Invention

According to the present invention, there can be provided a polyurethane resin that can satisfy both excellent cold-resistant flexibility and chemical resistance.

Description of Embodiments

Hereinunder the present invention is described in detail. In the present invention, a polyurethane resin is an inclusive term for a polyurethane resin and a polyurethane-urea resin.

[Polyurethane resin]

The polyurethane resin of the present invention is a polyurethane resin containing a polyol component and an isocyanate component and satisfying the following (1) to (3):

(1) The polyol component contains a polycarbonate diol component, and the isocyanate component contains a linear aliphatic isocyanate;
(2) The polycarbonate diol component has a number-average molecular weight of 500 to 3000, and contains a diol-derived structure having 3 to 10 carbon atoms in the structure thereof;
(3) 10 mol% or more of the isocyanate component is a linear aliphatic isocyanate component having 4 to 10 carbon atoms.

Hereinunder the constituent components of the polyurethane resin are described in more detail.

[Polyol component]

The polyol component in the present invention contains a polycarbonate diol component, and a polycarbonate diol to be the polycarbonate diol component has at least a number-average molecular weight of 500 to 3000, and contains a diol-derived structure having 3 to 10 carbon atoms in the structure thereof.

Here, "one containing a diol-derived structure having 3 to 10 carbon atoms in the structure thereof' can be said to be a polycarbonate diol that gives a diol having 3 to 10 carbon atoms through hydrolysis, and is, for example, preferably a polycarbonate diol represented by the following formula (1) or formula (2):

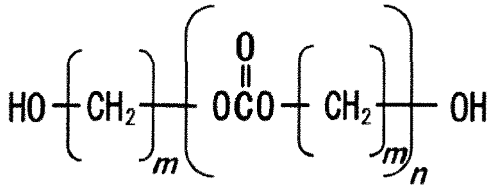

Formula (1)

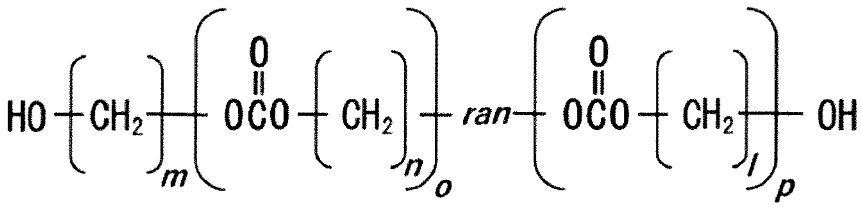

Formula (2)

In the above formula (1), m is 3 to 10, and n is a natural number to make the compound have a number-average molecular weight of 500 to 3000. For example, Eternacoll UH-200 (from Ube Industries, Ltd.) used in Examples given hereinunder has m = 6, and a number-average molecular weight of about 2000, and has a theoretical value of n of being 13 or 14.

In the above formula (2), m, n and l each are 3 to 10, and o and p each are a natural number to make the compound have a number-average molecular weight of 500 to 3000. For example, BENEBiOL NL-2010DB (from Mitsubishi Chemical Corporation) used in Examples given hereinunder has m = 4, n = 4, l = 10, (o+1):p = 9:1, and a number-average molecular weight of about 2000, and has a theoretical value of o of being 13 or 14.

The number-average molecular weight of the polycarbonate diol for use in the present invention is 500 to 3000, preferably 700 to 2700, more preferably 900 to 2500. When the number-average molecular weight is more than 3000, chemical resistance lowers, and when it is less than 500, cold-resistant flexibility lowers.

The number-average molecular weight is a polystyrene-equivalent number-average molecular weight, and generally can be determined through gel permeation chromatography (GPC).

The proportion of the polycarbonate diol component in the polyol component is preferably 50% by mass or more. When the proportion of the polycarbonate diol component is 50% by mass or more, chemical resistance improves. From such a viewpoint, the proportion of the polycarbonate diol component in the polyol component is more preferably 70% by mass or more, even more preferably 90% by mass or more.

The polyol component in the present invention may contain any other polyol component than the polycarbonate diol component. Examples of the other polyol component include polyols of the following (1) to (5) (polyols having a number-average molecular weight of 500 or more).

(1) Polyether polyol

The polyether polyol includes one produced by polymerizing or copolymerizing any of an alkylene oxide (e.g., ethylene oxide, propylene oxide, butylene oxide), and a heterocyclic ether (e.g., tetrahydrofuran). Specifically, the polyether polyol includes polyethylene glycol, polypropylene glycol, polyethylene glycol-polytetramethylene glycol (block or random), polytetramethylene ether glycol, and polyhexamethylene glycol.

(2) Polyester polyol

The polyester polyol includes one produced by polycondensing at least any one of an aliphatic dicarboxylic acid (e.g., succinic acid, adipic acid, sebacic acid, glutaric acid, and azelaic acid) and an aromatic dicarboxylic acid (e.g., isophthalic acid and terephthalic acid), and a low-molecular-weight glycol (e.g., ethylene glycol, 1,2-propylene glycol, 1,3-propylene glycol, 1,3-butanediol, 1,4-butylene glycol, 1,6-hexamethylene glycol, neopentyl glycol and 1,4-bishydroxymethylcyclohexane).

Specifically, the polyester polyol includes polyethylene adipate diol, polybutylene adipate diol, polyhexamethylene adipate diol, polyneopentyl adipate diol, polyethylene/butylene adipate diol, polyneopentyl/hexyl adipate diol, poly-3-methylpentane adipate diol, and polybutylene isophthalate diol.

(3) Polylactone polyol

The polylactone polyol includes polycaprolactone diol and poly-3-methylvalerolactone.

(4) Polyolefin polyol

The polyolefin polyol includes polybutadiene glycol and polyisoprene glycol, or a hydrate thereof.

(5) Polymethacrylate diol

The polymethacrylate diol includes $\alpha,\omega$-polymethyl methacrylate diol and $\alpha,\omega$-polybutyl methacrylate diol.
The number-average molecular weight of the polyol is not specifically limited so far as it is 500 or more, but is preferably 500 to 4,000 or so. One alone or two or more of these polyols may be used either singly or as combined, but from the viewpoint of long-term durability, preferably, a polycarbonate diol is contained.

[Isocyanate component]

The isocyanate component in the present invention contains a linear aliphatic isocyanate component. At least 10 mol% or more of the isocyanate component is a linear aliphatic isocyanate component having 4 to 10 carbon atoms. When at least 10 mol% or more of the isocyanate component is a linear aliphatic isocyanate component having 4 to 10 carbon atoms, the cohesion force between urethane groups is high and the steric hindrance of the component is lower than an isocyanate having a cyclic structure, and therefore the paint or the like using the polyurethane resin of the present invention can be given chemical resistance and cold-resistant flexibility.
Examples of the linear aliphatic isocyanate having 4 to 10 carbon atoms include 1,4-tetramethylene diisocyanate, 1,5-pentamethylene diisocyanate (1,5-pentamethylene diisocyanate), 1,6-hexamethylene diisocyanate, 1,7-heptamethylene diisocyanate, and 1,8-octamethylene diisocyanate. Among these, from the viewpoint of more improving the chemical resistance and the cold-resistant flexibility of the paint or the like using the polyurethane resin of the present invention, a linear aliphatic isocyanate having 4 to 8 carbon atoms is preferred, and 1,5-pentamethylene diisocyanate or 1,6-hexamethylene diisocyanate is more preferred.
In the isocyanate component, the amount of the linear aliphatic isocyanate component having 4 to 10 carbon atoms is preferably 15 mol% or more, more preferably 25 mol% or more, even more preferably 35 mol% or more, further more preferably 45 mol% or more.
The isocyanate component in the present invention may contain any other isocyanate component than the linear aliphatic isocyanate having 4 to 10 carbon atoms, and examples of the other isocyanate component include aromatic diisocyanates such as toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 4,4'-methylenebis(phenylene isocyanate) (MDI), jurylene diisocyanate, tolylene diisocyanate, xylylene diisocyanate (XDI), 1,5-naphthalene diisocyanate, benzidine diisocyanate, o-nitrobenzidine diisocyanate, and 4,4'-diisocyanate dibenzyl; aliphatic diisocyanates such as methylene diisocyanate, and 1,10-decamethylene diisocyanate; alicyclic diisocyanates such as 1,4-cyclohexylene diisocyanate, 4,4'-methylenebis(cyclohexyl isocyanate), 1,5-tetrahydronaphthalene diisocyanate, isophorone diisocyanate, hydrogenated MDI and hydrogenated XDI; and polyurethane prepolymers prepared by reacting such a diisocyanate compound and a low-molecular-weight polyol or polyamine so as to have an isocyanate terminal.

[Chain extender]

Preferably, the polyurethane resin of the present invention contains a short-chain diol component and a short-chain diamine component, and in a case of an aqueous one, preferably, the resin further contains, in addition thereto, a compound component having one or more active hydrogens and having a hydrophilic group.

(Short-chain diol)

The diol to be a short-chain diol component is a compound having a number-average molecular weight of less than 500, and includes aliphatic glycols such as ethylene glycol, 1,2-propanediol, 1,3-propanediol, 1,3-butanediol, 1,4-butanediol, 1,6-hexanediol and neopentyl glycol, and alkylene oxide low-mol adducts thereof (having a number-average molecular weight of less than 500); alkylene ether glycols such as diethylene glycol, triethylene glycol, and dipropylene glycol; alicyclic glycols such as 1,4-bishydroxymethylcyclohexane, and 2-methyl-1,1-cyclohexanedimethanol, and alkylene oxide low-mol adducts thereof (having a number-average molecular weight of less than 500); aromatic glycols such as xylylene glycol, and alkylene oxide low-mol adducts thereof (having a number-average molecular weight of less than 500); bisphenols such as bisphenol A, thiobisphenol and sulfone bisphenol, and alkylene oxide low-mol adducts thereof (having a number-average molecular weight of less than 500); and alkyldialkanolamines such as C1 to C18 alkyldiethanolamines. Among these, aliphatic glycols are preferred.

In the case where the polyurethane resin of the present invention contains a short-chain diol, the proportion of the short-chain diol is, as a molar ratio, preferably 0.1 to 3 times the amount of the polyol component, more preferably 0.1 to 2 times, even more preferably 0.1 to 1 time. When the proportion of the short-chain diol falls within the above range, the chemical resistance and the mechanical properties of the urethane resin of the present invention can improve.

(Short-chain diamine)

The diamine to be a short-chain diamine component includes aliphatic diamine compounds such as ethylenediamine, trimethylenediamine, hexamethylenediamine, and octamethylenediamine; aromatic diamine compounds such as phenylenediamine, 3,3'-dichloro-4,4'-diaminodiphenylmethane, 4,4'-methylenebis(phenylamine), 4,4'-diaminodiphenyl ether, and 4,4'-diaminodiphenyl sulfone; alicyclic diamine compounds such as cyclopentanediamine, cyclohexyldiamine, 4,4-diaminodicyclohexylmethane, 1,4-diaminocyclohexane, , and isophoronediamine; and hydrazines such as hydrazine, carbodihydrazide, adipic acid dihydrazide, sebacic acid dihydrazide, and phthalic acid dihydrazide. Among these, from the viewpoint of improving durability, ethylenediamine is more preferred.

In the present invention, from the viewpoint of solving concerns about petroleum resource depletion and from the viewpoint of environmental friendliness, preferably, at least one selected from the group consisting the polyol component, the isocyanate component, the short-chain diol component and the diamine component, which constitute the polyurethane resin, is formed of a plant based raw material.

(Compound having one or more active hydrogens and having hydrophilic group)

The urethane resin of the present invention may contain a compound having one or more active hydrogens and having a hydrophilic group, except the above-mentioned compounds. As the compound having one or more active hydrogens and having a hydrophilic group, any known compound usable as a component for imparting dispersibility in water to polyurethane resin can be used.

In the compound, the active hydrogen is a hydrogen atom that reacts with an isocyanate group, and includes a hydrogen atom of a hydroxy group, a mercapto group or an amino group. Among these, a hydrogen atom of a hydroxy group is preferred. The hydrophilic group is a functional group for imparting dispersibility in water, and may be any of an anionic, cationic or nonionic one. An anionic group is preferred. The anionic hydrophilic group includes a carboxy group, a sulfo group, and a phosphate group, and among these, a carboxy group is preferred.

As the compound having an anionic hydrophilic group, those having a sulfonic acid-type, carboxylic acid-type or phosphoric acid-type hydrophilic group are usable, and examples thereof include carboxylic acid compounds such as dimethylolpropanoic acid, dimethylolbutanoic acid, lactic acid, and glycine; and sulfonic acid compounds such as taurine, and sulfoisophthalic acid-type polyester diols.

Among these, dialcohol carboxylic acid compounds, especially dimethylolalkanoic acids such as dimethylolpropanoic acid, and dimethylolbutanoic acid are preferably used.

The hydrophilic group may be neutralized with a neutralizing agent to be a salt. The neutralizing agent for an anionic hydrophilic group includes aqueous ammonia, organic amines, for example, alkylamines such as ethylamine, trimethylamine, triethylamine, triisopropylamine and tributylamine, and alkanolamines such as triethanolamine, N-methyldiethanolamine, N-phenyldiethanolamine, monoethanolamine, diethanolamine, dimethylethanolamine, diethylethanolamine and 2-amino-2-ethyl-1-propanol; and alkali metal hydroxides such as lithium hydroxide, sodium hydroxide and potassium hydroxide. Among these, tertiary alkylamines such as triethylamine, sodium hydroxide, and tertiary alkanolamines such as dimethylaminoethanol are preferred.

The above-mentioned alkanolamine can also be used as a chain elongation terminator.

In the case where the urethane resin of the present invention contains a component derived from the above-mentioned compound having one or more active hydrogens and having a hydrophilic group, the acid value of the polyurethane resin is preferably 5 to 40 mgKOH/g. When the acid value falls within the above range, the resin can be stably dispersed in water. From this viewpoint, the acid value is preferably 10 to 35 mgKOH/g, more preferably 10 to 25 mgKOH/g.

From the viewpoint of solving concerns about petroleum resource depletion and from the viewpoint of environmental friendliness, the biomass ratio (plant based raw material ratio) in the polyurethane resin is preferably 10% by mass or more, more preferably 20% by mass or more, even more preferably 30% by mass or more.

The above are exemplifications of preferred components, and the present invention is not limited to these. Accordingly, not only the components exemplified in the above but also any other compounds currently sold on the market and readily available from the market can be used.

[Polysiloxane compound]

A polysiloxane compound is used for polysiloxane modification of a polyurethane resin. As a result of polysiloxane modification, the wear resistance of the paint or the like using the polyurethane resin of the present invention can be improved. As the polysiloxane compounds, compounds having a structure of the following (1) to (4) can be used.

(1) Amino-modified polysiloxane

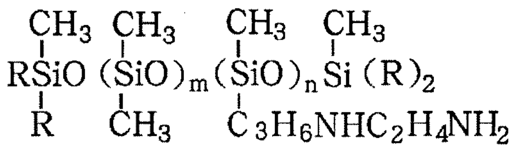

(m = 1 to 10, n = 2 to 10, R = $CH_3$ or $OCH_3$)

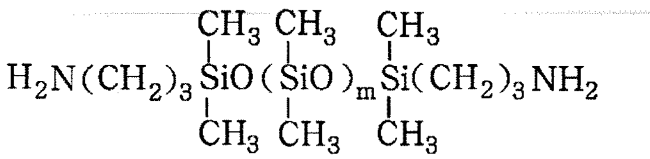

(m = 0 to 200)

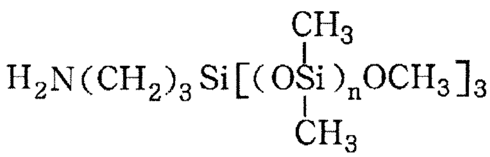

(n = 2 to 10)

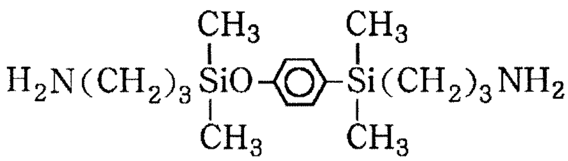

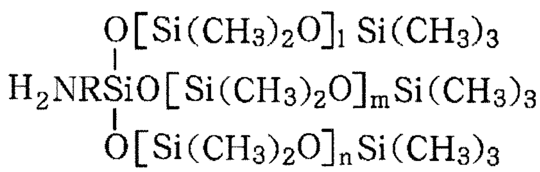

(branching points = 2 to 3, R = lower alkyl group, l = 2 to 200, m = 2 to 200, n = 2 to 200)

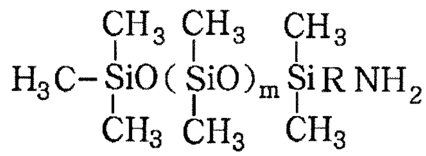

(m = 1 to 200, R = lower alkyl group)

(2) Epoxy-modified polysiloxane

Regarding use thereof, the following epoxy compounds are reacted with a polyol, a polyamide or a polycarboxylic acid to make the resultant compound have a terminal active hydrogen.

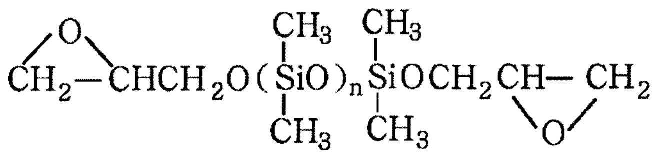

(n = 1 to 200)

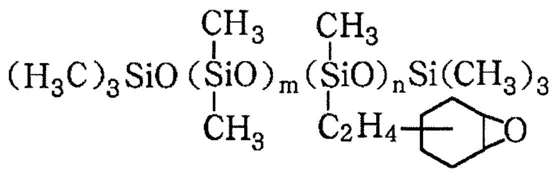

(m = 1 to 10, n = 2 to 10)

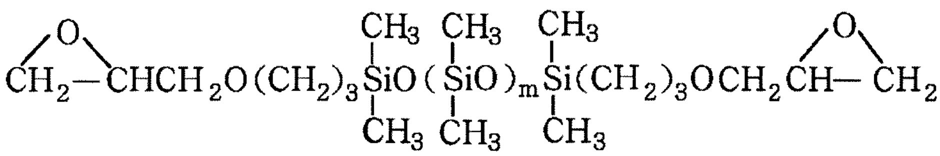

(m = 1 to 200)

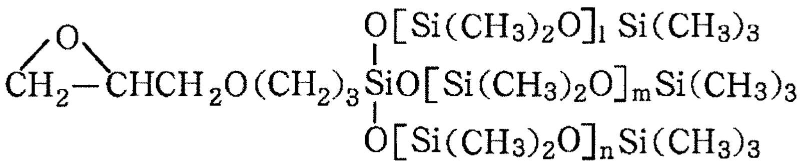

(branching points = 2 to 3, l = 2 to 200, m = 2 to 200, n = 2 to 200)

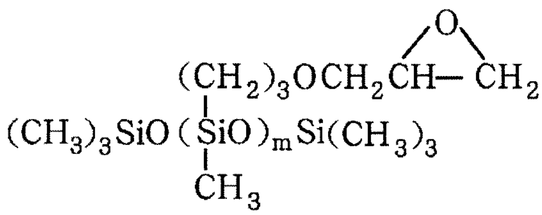

(m = 1 to 10)

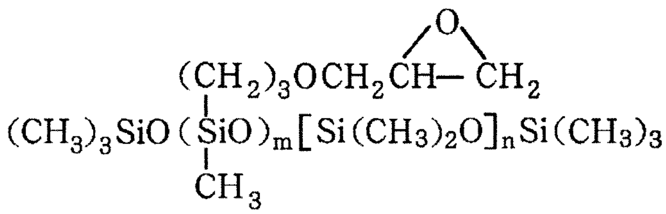

(m = 1 to 10, n = 2 to 10)

(3) Alcohol-modified polysiloxane

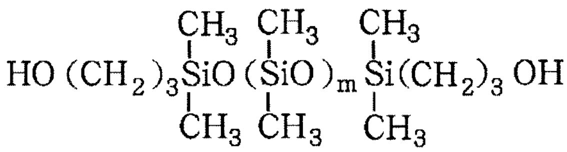

(m = 1 to 300)

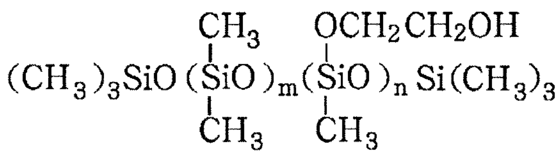

(m = 1 to 300, n = 2 to 50)

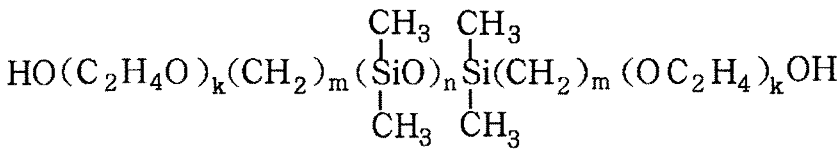

(k = 1 to 200, m = 2 to 6, n = 1 to 400)

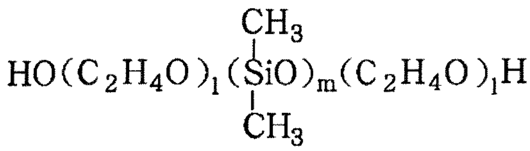

(l = 1 to 200, m = 1 to 200)

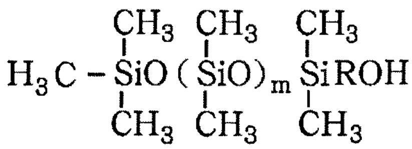

(m = 1 to 400, R = lower alkyl group)

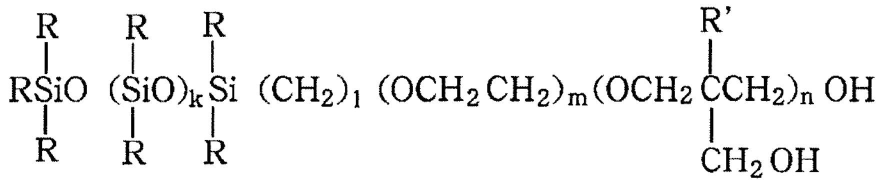

(R = $CH_3$ or $OCH_3$, R' = hydrogen atom or alkyl group, k = 1 to 250, l = 0 to 5, m = 0 to 50, n = 1 to 3)

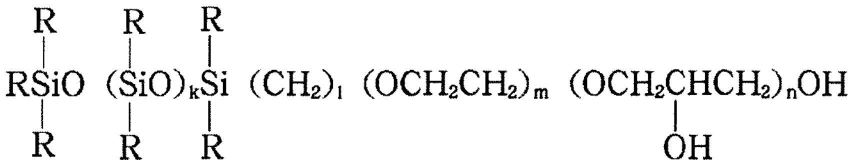

(R = $CH_3$ or $OCH_3$, k = 1 to 250, l = 0 to 5, m = 0 to 50, n = 1 to 3)

(4) Mercapto-modified polysiloxane

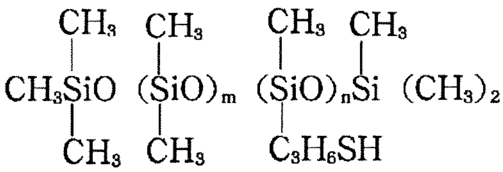

(m = 1 to 20, n = 2 to 100)

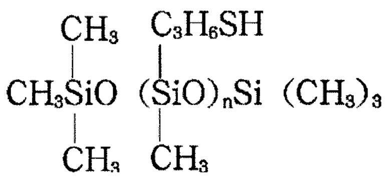

(n = 2 to 100)

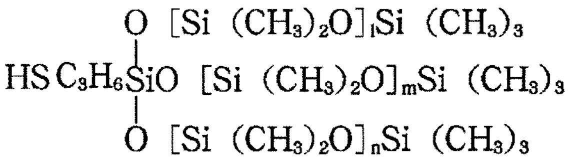

(branching points = 2 to 3, l = 2 to 200, m = 2 to 200, n = 2 to 200)

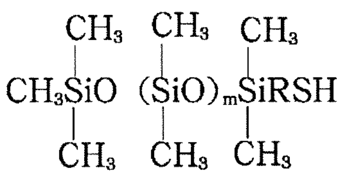

(m = 1 to 300, R = lower alkyl group)

The above-mentioned polysiloxane compounds (1) to (4) are exemplifications of preferred compounds, but these are not limitative. Among the above, alcohol-modified polysiloxanes are preferred, and the following compounds

are more preferred.

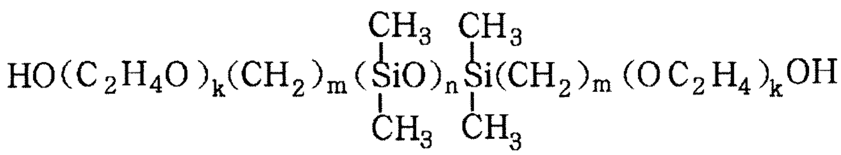

(k = 1 to 200, m = 2 to 6, n = 1 to 400)

[Glass transition temperature of urethane resin]

The glass transition temperature of the urethane resin of the present invention is preferably -50 to -10°C. When the glass transition temperature of the urethane resin falls within the above range, cold-resistant flexibility improves. From this viewpoint, the glass transition temperature of the urethane resin of the present invention is preferably -50 to -20°C, more preferably -50 to -30°C. The glass transition temperature can be measured according to the method described in the section of Examples.

[Maximum value of tanδ]

The maximum value (peak temperature) of tanδ of the urethane resin of the present invention preferably falls within a temperature range of -40 to -10°C. When the maximum value of tanδ of the urethane resin falls within the above-mentioned temperature range, energy at bending can be readily absorbed to prevent cracking or the like, and cold-resistant flexibility improves. From this viewpoint, the maximum value of tanδ of the urethane resin of the present invention preferably falls within a temperature range of -40 to -15°C, more preferably within a temperature range of -40 to -25°C. The maximum value of tanδ can be measured according to the method described in the section of Examples.

[100% modulus]

When the urethane resin of the present invention is formed into a film, a physical property value of 100% modulus at -10°C of the resultant film is preferably 20 MPa or less. When the physical property value of 100% modulus is 20 MPa or less, cold-resistant flexibility improves. The physical property value of 100% modulus is preferably 15 MPa or less, more preferably 10 MPa or less. The physical property value of 100% modulus can be measured according to the method described in the section of Examples.

After immersed in olefinic acid at 70°C for 24 hours is 20% or more, a 100% modulus retention rate of the resultant film is preferably 20% or more. When the 100% modulus retention rate is 20% or more, chemical resistance improves. The 100% modulus retention rate is preferably 30% or more, more preferably 50% or more. The physical property value retention rate can be measured according to the method described in the section of Examples.

(Production method for polyurethane resin)

A production method for the polyurethane resin of the present invention is not specifically limited, and any conventionally-known method for production of polyurethane is employable. Specifically, the polyurethane resin can be produced by reacting a high-molecular polyol and a polyisocyanate, and optionally a chain extender such as a short-chain diol and a short-chain diamine, as well as a polysiloxane compound and, for an aqueous resin, additionally a compound having one or more active hydrogen groups and having a hydrophilic group, and thereafter, if desired, further reacting the resultant product with a neutralizing agent, a chain extender or a terminator.

In the production method, an organic solvent or water may be used, if desired.

Examples of the organic solvent include ketone solvents (e.g., acetone, methyl ethyl ketone, methyl isobutyl ketone, cyclohexanone), aromatic hydrocarbon solvents (e.g., toluene, xylene, Swasol (aromatic hydrocarbon solvent from Cosmo Energy Group), Solvesso (aromatic hydrocarbon solvent from Exxon Chemical Corporation)), and aliphatic hydrocarbon solvents (e.g., n-hexane). Among these, from the viewpoint of handleability, N,N-dimethylformamide, methyl ethyl ketone, acetone and tetrahydrofuran are preferred.

<Additives>

The polyurethane resin of the present invention may contain additives, as needed. Examples of the additives include a matting agent, an antioxidant (e.g., hindered phenol-based, phosphite-based, thioether-based), a light stabilizer

(e.g., hindered amine-based), a UV absorbent (e.g., benzophenone-based, benzotriazole-based), a vapor discoloration stabilizer (e.g., hydrazine-based), and a metal deactivator.

The matting agent includes resin particles, silica particles, talc, aluminum hydroxide, calcium sulfate, calcium silicate, calcium carbonate, magnesium carbonate, barium carbonate, alumina silicate, molecular sieves, kaolin, mica, and mica. In the case where the polyurethane resin of the present invention contains a matting agent, the resultant coating film to be a skin layer can have a mat tone.

[Paint]

The paint of the present invention contains a polyurethane resin, in which a linear aliphatic isocyanate having 4 to 10 carbon atoms is used as the isocyanate component to constitute the polyurethane resin, and therefore, the chemical resistance and the cold-resistant flexibility of the coating film can be improved.

From the viewpoint of improving the chemical resistance thereof, the paint of the present invention preferably contains, in addition to the polyurethane resin, at least one selected from the group consisting of an isocyanate-based crosslinking agent, a carbodiimide-based crosslinking agent, an oxazoline-based crosslinking agent and an epoxy-based crosslinking agent.

When the amount of the crosslinking agent used is too large, there may occur some troubles of film embrittlement, and plasticization by unreacted crosslinking agent. Consequently, the amount of the crosslinking agent to be used is, relative to 100 parts by mass of the polyurethane resin, preferably 10 parts by mass or less in terms of the crosslinking agent solid content, more preferably 1.0 to 7.5 parts by mass.

[Structure]

The structure of the present invention is a structure including the polyurethane resin of the present invention, or a structure including the paint of the present invention in at least any of the surface and the inside thereof. Examples of the structure include a synthetic artificial leather.

Specific examples of a synthetic artificial leather include a synthetic artificial leather composed of a substrate and a skin layer, or a substrate, an adhesive layer and a skin layer, and a synthetic artificial leather additionally having a surface treatment layer as the outermost skin layer thereof. A substrate for synthetic artificial leather to be used in the synthetic artificial leather includes a woven fabric, a nonwoven fabric and a sponge.

The synthetic artificial leather can be produced, for example, as follows. First, as a skin-forming agent to form a skin layer, the polyurethane resin of the present invention is applied onto a release paper, according to a known method such as comma coating, knife coating or roll coating. This is appropriately dried to form a skin layer. On the skin layer, as an adhesive to be applied thereto, a known polyurethane resin adhesive is applied according to a known method such as comma coating, knife coating or roll coating. This is dried, and then pressure-bonded to a substrate for synthetic artificial leather. Further, this is aged and then released from the release paper to be a synthetic artificial leather.

For exemplification of the structure, a method for producing it by applying the polyurethane resin of the present invention to a substrate is described below.

<Substrate>

The substrate includes a film and a synthetic leather using a resin mentioned below. The substrate may be a foamed substrate.

The resin includes polyvinyl chloride resins, polyethylene resins, polypropylene resins, olefin-based resins such as thermoplastic polyolefins, ethylene-propylene-diene resins, styrene-acrylonitrile resins, polysulfone resins, polyphenylene ether resins, acrylic resins, silicone resins, fluororesins, polyester resins, polyamide resins, polyimide resins, polystyrene resins, polyurethane resins, polycarbonate resins, norbornene resins, cellulose resins, polyvinyl alcohol resins, polyvinyl formal resins, polyvinyl butyral resins, polyvinylpyrrolidone resins, polyvinyl acetal resins, polyvinyl acetate resins, engineering plastics, and biodegradable plastics.

In particular, for interior materials for vehicles, there are mentioned polyvinyl chloride resins, thermoplastic polyolefins, polyurethanes, polypropylenes, and the like.

In the case where the substrate is a foamed substrate, a substrate of a polyvinyl chloride resin can be used.

The thickness of the substrate is preferably 0.2 to 0.8 mm, and in the case where the substrate is a foamed substrate and, after foamed, the thickness thereof is preferably 0.3 to 4.5 mm.

<Production method>

The polyurethane resin of the present invention is applied to a substrate, then dried at 80 to 140°C, and optionally

crosslinked to form a coating film.

In the case where the substrate is a foamed substrate, for example, where the substrate is a polyvinyl chloride resin substrate sheet, the method includes a step of foaming the foaming agent in the vinyl chloride foaming layer composition by heating to form a foamed polyvinyl chloride layer (foaming step). For example, prior to the step, the polyurethane resin of the present invention is applied to the substrate sheet by spray coating, gravure coating, or the like to form a coating film. Subsequently, this is dried at 80 to 140°C for 1 to 3 minutes to form a coating film, and then foamed at 130 to 230°C. Further, for imparting a design appearance to the film, an embossing roll having an embossing pattern engraved on the side of the surface treatment layer is pressed against the film while the surface of the film is kept heated (at 100 to 190°C), thereby giving a synthetic resin skin material having an embossed pattern formed on the surface thereof (for example, vehicle seats) (patterning step).

In the case where the polyurethane resin of the present invention is applied to a poorly-adhesive thermoplastic resin substrate, the surface of the substrate may be primer-treated for increasing the adhesiveness thereto to the coating material.

The foaming step and the patterning step may be carried out separately prior to the film-forming step, or may be carried out after the surface treatment layer-forming step. Specifically, herein employable is a method of applying a polyurethane resin to an unfoamed substrate and then the substrate is foamed by heating, or a method of applying a polyurethane resin to a foamed substrate. Because of the reason of improving uniform coatability with the surface treatment layer and improving the adhesion strength of the layer, a method of foaming the substrate after coated with a polyurethane resin layer is preferred.

The thickness of the coating film formed as above is preferably 2 to 30 μm.

## Examples

The present invention is described more specifically with reference to Examples and Comparative Examples given below, but the present invention is not limited to these. "Part" given below means part by mass, and "%" means % by mass.

### <Production of PU1 to 15>

PU1 to 15 that are polyurethane resins and siloxane-modified polyurethane resins used in the present Examples were produced as follows.

A reactor equipped with a stirrer, a condenser tube, a thermometer, a nitrogen inlet tube and a manhole was purged with nitrogen gas, and then, using a biomass PC diol (BENEBiOL NL-2010DB, from Mitsubishi Chemical Corporation, number-average molecular weight 2000, biomass ratio 5.4%, corresponding to the formula (2)) or a non-biomass PC diol (Eternacoll UH-200, from Ube Industries, Ltd., number-average molecular weight 2000, corresponding to the formula (1)), and 1,3-butanediol and DMF (dimethylformamide), a solution was prepared to have a concentration of 80%, and heated up to 70°C. For PU8 and PU15, a both-terminal polysiloxane diol (compound a) was added.

This was reacted with isophorone diisocyanate and hexamethylene diisocyanate or 1,5-pentamethylene diisocyanate (biomass ratio 70% by weight) each in a predetermined amount (NCO/OH = 1.4) until NCO% could reach 90 to 98% of the theoretical value, then the solution concentration was diluted to 30%, and the solution was cooled down to 50°C or lower. Thereafter IPDA (isophoronediamine) was added thereto in a molar amount of 90% to 100% equivalent to the residual NCO% for chain elongation, and further reaction with the remaining NCO was stopped by isopropyl alcohol. According to the process, polyurethane solutions and siloxane-modified polyurethane resin solutions PU1 to 15 were produced.

### <Production of PUD1 to 15>

Next, aqueous polyurethane resins and aqueous siloxane-modified polyurethane resins for use in the present Examples, PUD1 to 15 were produced as follows.

A reactor equipped with a stirrer, a reflux condenser, a thermometer, a nitrogen inlet tube and a manhole was purged with nitrogen gas, and then a biomass PC diol (BENEBiOL NL-2010DB, from Mitsubishi Chemical Corporation, number-average molecular weight 2000, corresponding to the formula (2)) or a non-biomass PC diol (Eternacoll UH-200, from Ube Industries, Ltd., number-average molecular weight 2000, corresponding to the formula (1)), and 1,3-butanediol, dimethylolpropanoic acid and acetone were added thereto each in a predetermined amount, and uniformly dissolved to prepare a solution having a concentration of 80%. For PUD8 and PUD15, a both-terminal polysiloxane diol (compound a) was added.

Subsequently, isophorone diisocyanate and hexamethylene diisocyanate or 1,5-pentamethylene diisocyanate (biomass ratio 70% by weight) were added each in a predetermined equivalent ratio (NCO/OH = 1.4) and reacted at

80°C until NCO% could reach 90 to 98% of the theoretical value, then the solution concentration was diluted to 60%, and the solution was cooled down to 50°C. To this, ion-exchanged water in an amount of 20% of the solid content thereof, and a neutralizing agent (triethylamine) in a predetermined amount (to be equivalent to hydrophilic group-COOH) were added, then the resultant system was uniformly emulsified, and ethylenediamine (100% molar amount of the residual NCO%) was added for chain elongation, and the the reaction was stopped with water. Finally, acetone in the system was removed by degassing in vacuum to give aqueous polyurethane resin dispersions and aqueous siloxane-modified polyurethane resin dispersions, PUD1 to 15.

The acid value was measured by a titration method according to JIS K-1557, and the content of the functional group to be an acid component per gram of resin is shown in Table 1 as mg of KOH. The unit is mgKOH/g.

PU1, PU14, PUD1 and PUD14 did not use a biomass material, and PUD1 to 15 were made to have an organic solvent ratio of 5% or less in consideration of environmental influences by volatile organic compounds (VOC countermeasures). The resultant resin solutions and resin dispersions were evaluated in point of stability according to the following 5-rank evaluation criteria. The results are shown in Table 1.

<Evaluation criteria>

(Resin solution stability)

5: Fluid at room temperature.
4: Fluid at room temperature but becomes cloudy.
3: Fluidity is partly lost at room temperature.
2: Most fluidity is lost at room temperature.
1: Fluidity is completely lost at room temperature.

(Resin dispersion stability)

5: Neither sedimentation nor separation at room temperature.
4: Partly sediments or separates at room temperature.
3: Mostly sediments or separates at room temperature.
2: Partly gels at room temperature.
1: Greatly sediments, separates or gels at room temperature.

Table 1

| | | PU | | | | | | | | | | | | | | |
|---|---|---|---|---|---|---|---|---|---|---|---|---|---|---|---|---|
| NO. | | 1 | 2 | 3 | 4 | 5 | 6 | 7 | 8 | 9 | 10 | 11 | 12 | 13 | 14 | 15 |
| Formulation (part) | Biomass PC Diol | | 58 | 58 | 58 | 58 | 58 | - | 43 | 58 | 58 | 58 | 58 | 58 | - | 43 |
| | Non-biomass PC Diol | 58 | - | - | - | - | - | 58 | - | - | - | - | - | - | 58 | - |
| | Si Diol | - | - | - | - | - | - | - | 15 | - | - | - | - | - | - | 15 |
| | 1,3BD | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 |
| | Dimethylolpropionic acid (part) | - | - | - | - | - | - | - | - | - | - | - | - | - | - | - |
| | IPDA (part) | 3.2 | 3.2 | 3.2 | 3.2 | 3.2 | 3.2 | 3.2 | 3.2 | 3.2 | 3.2 | 3.2 | 3.2 | 3.2 | 3.2 | 3.2 |
| IPDI/1.5PDI (molar ratio) | | 100/0 | 80/20 | 60/40 | 40/60 | 20/80 | 0/100 | 0/100 | 0/100 | | | | | | | |
| IPDI/HDI (molar ratio) | | | | | | | | | | 80/20 | 60/40 | 40/60 | 20/80 | 0/100 | 0/100 | 0/100 |
| 1,3BD/Polyol (molar ratio) | | 60/100 | 60/100 | 60/100 | 60/100 | 60/100 | 60/100 | 60/100 | 60/100 | 60/100 | 60/100 | 60/100 | 60/100 | 60/100 | 60/100 | 60/100 |
| Acid Value of Resin (mgKOH/g) | | 0 | 0 | 0 | 0 | 0 | 0 | 0 | 0 | 0 | 0 | 0 | 0 | 0 | 0 | 0 |
| Evaluation | Stability of Resin Solution | 5 | 5 | 5 | 5 | 4 | 3 | 3 | 3 | 5 | 5 | 4 | 3 | 2 | 2 | 2 |
| | | PUD | | | | | | | | | | | | | | |
| NO. | | 1 | 2 | 3 | 4 | 5 | 6 | 7 | 8 | 9 | 10 | 11 | 12 | 13 | 14 | 15 |
| Formulation (part) | Biomass PC Diol | - | 58 | 58 | 58 | 58 | 58 | - | 43 | 58 | 58 | 58 | 58 | 58 | - | 43 |
| | Non-biomass PC Diol | 58 | - | - | - | - | - | 58 | - | - | - | - | - | - | 58 | - |
| | Si Diol | - | - | - | - | - | - | - | 15 | - | - | - | - | - | - | 15 |
| | 1,3BD | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | Dimethylolpropionic acid | 1.9 | 1.9 | 1.9 | 1.9 | 1.9 | 1.9 | 1.9 | 2.0 | 1.9 | 1.9 | 1.9 | 1.9 | 1.9 | 1.9 | 2.0 |
| | EDA | 1.1 | 1.1 | 1.1 | 1.1 | 1.1 | 1.1 | 1.1 | 1.1 | 1.1 | 1.1 | 1.1 | 1.1 | 1.1 | 1.1 | 1.1 |
| IPDI/1.5PDI (molar ratio) | | 100/0 | 80/20 | 60/40 | 40/60 | 20/80 | 0/100 | 0/100 | 0/100 | | | | | | | |
| IPDI/HDI (molar ratio) | | | | | | | | | | 80/20 | 60/40 | 40/60 | 20/80 | 0/100 | 0/100 | 0/100 |

(continued)

| | | PUD | | | | | | | | | | | | | | |
|---|---|---|---|---|---|---|---|---|---|---|---|---|---|---|---|---|
| NO. | | 1 | 2 | 3 | 4 | 5 | 6 | 7 | 8 | 9 | 10 | 11 | 12 | 13 | 14 | 15 |
| 1,3BD/Polyol (molar ratio) | | 10/100 | 10/100 | 10/100 | 10/100 | 10/100 | 10/100 | 10/100 | 10/100 | 10/100 | 10/100 | 10/100 | 10/100 | 10/100 | 10/100 | 10/100 |
| Acid Value of Resin (mgKOH/g) | | 11.4 | 11.4 | 11.4 | 11.4 | 11.4 | 11.4 | 11.4 | 11.6 | 11.3 | 11.3 | 11.3 | 11.3 | 11.3 | 11.3 | 11.4 |
| Evaluation | Stability of Resin Dispersion | 5 | 5 | 5 | 5 | 5 | 4 | 3 | 3 | 5 | 5 | 4 | 3 | 2 | 2 | 2 |

Abbreviations in Table 1 are as follows.

(1) PC Diol: Polycarbonate diol
(2) Si Diol: Compound a represented by the following formula (n is an integer, having a number average molecular weight of 1,900)

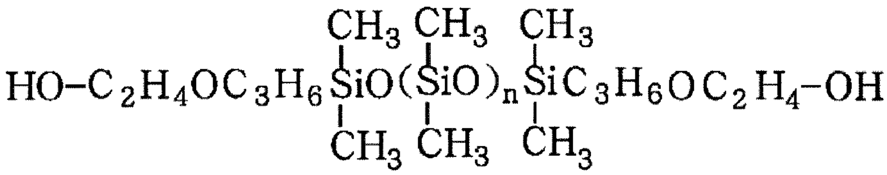

Compound a

(3) 1,3BD: 1,3-Butanediol
(4): IPDA: Isophoronediamine
(5): IPDI Isophorone diisocyanate
(6) 1,5PDI: 1,5-Pentamethylene diisocyanate (plant based)
(7) HDI: Hexamethylene diisocyanate
(8) EDA: Ethylenediamine
(9) Polyol: PC diol and Si diol

(Examples 1 to 28, Comparative Examples 1 and 2)

<Resin properties>

Test results according to the following methods are shown in Table 2.

(1) Film sample production

First, the polyurethane resin was applied to a release paper and dried at 130°C for 2 minutes to form a coating film, which was cut into a test sample having a thickness of 50 μm, a length of 60 mm and a width of 10 mm.

(2) Measurement of film properties (-10°C)

Using an autograph (from Shimadzu Corporation, Model Number: AGS-J) and a constant-temperature bath (from Shimadzu Corporation, Model Number: TCR1-200) DG0141014), 100% modulus at -10°C of the sample was measured.

(3) Oleic acid resistance test

The film was immersed in oleic acid at 70°C for 24 hours, and the property thereof was measured at room temperature according to the same method as in (2). 100% modulus retention rate was calculated according to the following expression.

(100% modulus of film after immersed in oleic acid)/(100% modulus of film before immersed in oleic acid)

(4) Kinematic viscoelasticity

Using a kinematic viscoelastometer (from 01dB-Metravib Corporation, Model Number: DMA-50), the film was measured and analyzed for the kinematic viscoelasticity behavior thereof to determine the glass transition temperature: Tg (calculated from E') and tanδ peak temperature thereof. The measurement condition is as follows.
Condition: frequency 10 Hz, temperature rise rate 5°C/min, temperature range - 110°C to 250°C (until softened).

Table 2

| | Example | | | | | | | | | | | | | | Comparative Example |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 1 |
| Polyurethane Resin | PU2 | PU3 | PU4 | PU5 | PU6 | PU7 | PU8 | PU9 | PU10 | PU11 | PU12 | PU13 | PU14 | PU15 | PU1 |
| 100% Modulus at -10°C (MPa) | 19.1 | 16.2 | 13.5 | 10.5 | 8.5 | 6.4 | 6.5 | 19 | 15 | 11 | 10 | 8.2 | 7.5 | 7.7 | 25 |
| Oleic Acid-Resistant 100% Modulus Retention Rate (%) | 25 | 40 | 55 | 70 | 90 | 70 | 85 | 28 | 44 | 56 | 75 | 90 | 75 | 87 | 19 |
| Tg(°C) | -18 | -18 | -20 | -26 | -38 | -40 | -37 | -19 | -19.5 | -22 | -28 | -39 | -40 | -39 | -8 |
| tanδ Peak Temperature (°C) | -12 | -13 | -16 | -19 | -23 | -28 | -23 | -12 | -13 | -17 | -20 | -25 | -28 | -26 | -2 |

| | Example | | | | | | | | | | | | | | Comparative Example |
|---|---|---|---|---|---|---|---|---|---|---|---|---|---|---|---|
| | 15 | 16 | 17 | 18 | 19 | 20 | 21 | 22 | 23 | 24 | 25 | 26 | 27 | 28 | 2 |
| Polyurethane Resin | PUD2 | PUD3 | PUD4 | PUD5 | PUD6 | PUD7 | PUD8 | PUD9 | PUD10 | PUD11 | PUD12 | PUD13 | PUD14 | PUD15 | PUD1 |
| 100% Modulus at -10°C (MPa) | 18.2 | 15.5 | 14 | 9.8 | 7.5 | 6.2 | 6 | 18.3 | 15 | 12 | 9.5 | 7.4 | 6.8 | 7.2 | 22 |
| Oleic Acid-Resistant 100% Modulus Retention Rate (%) | 20 | 29 | 46 | 62 | 82 | 65 | 74 | 20.5 | 28 | 50 | 65 | 84 | 58 | 75 | 10 |
| Tg(°C) | -15 | -17 | -20 | -25 | -35 | -36 | -36 | -15 | -16.7 | -21 | -28 | -37 | -39 | -37 | -5 |
| tanδ Peak Temperature (°C) | -10 | -10 | -16 | -18 | -22 | -23 | -22 | -11 | -11.5 | -16 | -19.5 | -24 | -28 | -24.5 | 0 |

(Examples 29 to 56, Comparative Examples 3 and 4)

<Properties of synthetic artificial leather>

Test results according to the following methods are shown in Table 3.

(1) Synthetic artificial leather production

[Formulation of skin layer]

1. Oil-based formulation

| | |
|---|---|
| PU1 to PU15 | 100 parts |
| Seika Seven BS-780 (s) Black (from Dainichiseika Color & Chemicals Mfg. Co., Ltd.) | 20 parts |
| DMF | given amount (to make solid content 20%) |

2. Water-based formulation

| | |
|---|---|
| PUD1 to 15 | 100 parts |
| Seika Seven DW-1780 Black (from Dainichiseika Color & Chemicals Mfg. Co.,Ltd.) | 20 parts |

[Formulation of adhesive layer]

1. Oil-based formulation

| | |
|---|---|
| Resamine UD-8351 (polyurethane resin adhesive, from Dainichiseika Color & Chemicals Mfg. Co., Ltd.) | 100 parts |
| C-50 crosslinking agent (isocyanate-based crosslinking agent, from Dainichiseika Color & Chemicals Mfg. Co., Ltd.) | 10 parts |

2. Water-based formulation

| | |
|---|---|
| Resamine D-1060 (polyurethane resin adhesive, from Dainichiseika Color & Chemicals Mfg. Co., Ltd.) | 100 parts |
| Resamine D-65 (isocyanate-based crosslinking agent, from Dainichiseika Color & Chemicals Mfg. Co., Ltd.) | 10 parts |

The above skin layer formulation was applied to a release paper and dried to form a skin layer having a thickness of 20 μm. The above adhesive layer formulation was applied to the formed skin layer to form an adhesive layer having a thickness of 20 μm, and this was transferred onto a raised fabric according to a dry lamination condition (150°C, clearance = 0), and then aged at 50°C for 48 hours to give synthetic artificial leathers of Examples 29 to 56 and Comparative Examples 3 and 4.

(2) Oleic acid-resistance test

One ml of oleic acid was dripped to the above synthetic artificial leather and left at 80°C for 24 hours, and thereafter the appearance of the synthetic artificial leather was evaluated as follows.

A: No change in visual observation.
B: Somewhat swollen in visual observation.
C: Melted in visual observation.

(3) Cold-resistant flexibility test

Using a DeMattia tester (from Yasuda Seiki Co., Ltd., Model Number: NO. 119-L DEMATTIA FLEXING TESTER), a test sheet of the synthetic artificial leather having a width of 50 mm and a length of 150 mm (inspection range 100 mm) was tested in a flexing test at a low temperature of -10°C in an environment of -10°C and in a stretching flexing range of 72 to 108%. The evaluation indices are as follows.

A: Not cracked after 30000 times flexing.
B: Not cracked after 10000 times flexing, but cracked after 30000 times flexing.
C: Cracked after 10000 times flexing.

Table 3

| | Example | | | | | | | | | | | | | | Comparative Example |
|---|---|---|---|---|---|---|---|---|---|---|---|---|---|---|---|
| | 29 | 30 | 31 | 32 | 33 | 34 | 35 | 36 | 37 | 38 | 39 | 40 | 41 | 42 | 3 |
| Polyurethane Resin | PU2 | PU3 | PU4 | PU5 | PU6 | PU7 | PU8 | PU9 | PU10 | PU11 | PU12 | PU13 | PU14 | PU15 | PU1 |
| Oleic Acid Resistance | B | A | A | A | A | B | A | B | A | A | A | A | B | A | C |
| Cold-resistant Flexibility | B | A | A | A | A | A | A | B | A | A | A | A | A | A | C |

| | Example | | | | | | | | | | | | | | Comparative Example |
|---|---|---|---|---|---|---|---|---|---|---|---|---|---|---|---|
| | 43 | 44 | 45 | 46 | 47 | 48 | 49 | 50 | 51 | 52 | 53 | 54 | 55 | 56 | 4 |
| Polyurethane Resin | PUD 2 | PUD 3 | PUD 4 | PUD 5 | PUD 6 | PUD 7 | PUD 8 | PUD 9 | PUD 10 | PUD 11 | PUD 12 | PUD 13 | PUD 14 | PUD 15 | PUD1 |
| Oleic Acid Resistance | B | A | A | A | A | B | A | B | A | A | A | A | B | A | C |
| Cold-resistant Flexibility | B | B | A | A | A | A | A | B | B | A | A | A | A | A | C |

(Examples 57 to 84, Comparative Examples 5 and 6)

<Properties of Paint>

Test results according to the following methods are shown in Table 4.

(1) Preparation of surface treatment agent

Each of PU1 to PU15 and PUD1 to PUD15, and a matting agent and a crosslinking agent were blended in a ratio shown in Table 4 below to prepare a surface treatment agent of Examples 57 to 84, and Comparative Examples 5 and 6.

Details of the matting agent and the crosslinking agent are as follows.

1. Matting agent

Polyurethane resin particles: Art-pearl C-400 Transparent (from Negami Chemical Industrial Co., Ltd., volume-average particle size 15 μm, Tg = - 13°C)

Silica particles: ACEMATT TS-100 (from Evonik Corporation, volume-average particle size 9.5 μm)

2. Crosslinking agent

Oil-based: C-50 crosslinking agent (from Dainichiseika Color & Chemicals Mfg. Co., Ltd., isocyanate-based crosslinking agent)

Water-based: Epocros WS-500 (from Nippon Shokubai Co., Ltd., oxazoline-based crosslinking agent, Tg = 16°C, oxazoline group equivalent = 220)

(2) Coated article production

Using a bar coater, the surface treatment agent prepared in Examples and Comparative Examples was applied to a PVC sheet, and dried with a drier at 130°C for 2 minutes to produce a test sheet having a coating thickness of 10 μm.

(3) Oleic acid resistance test

One ml of oleic acid was dripped to the above test sheet and left at 80°C for 24 hours, and thereafter the appearance of the test sheet was evaluated as follows.

A: No significant change in visual observation.
B: Light cracking or peeling seen in the coating film in visual observation.
C: Remarkable film peeling seen in visual observation.

(4) Cold-resistant flexibility test

The above test sheet was tested in a flexing test according to the same method as in the cold-resistant flexibility test for synthetic artificial leather. The evaluation indices are as follows.

A: Neither whitened nor cracked after 10000 times flexing.
B: Whitened but not cracked after 10000 times flexing.
C: Whitened and cracked after 10000 times flexing.

Table 4

| | | Example | | | | | | | | | | | | | | Comparative Example |
|---|---|---|---|---|---|---|---|---|---|---|---|---|---|---|---|---|
| | | 57 | 58 | 59 | 60 | 61 | 62 | 63 | 64 | 65 | 66 | 67 | 68 | 69 | 70 | 5 |
| Polyurethane Resin | | PU2 | PU3 | PU4 | PU5 | PU6 | PU7 | PU8 | PU9 | PU10 | PU11 | PU12 | PU13 | PU14 | PU15 | PU1 |
| Formulation (part) | Resin Solid Fraction | 20 | 20 | 20 | 20 | 20 | 20 | 20 | 20 | 20 | 20 | 20 | 20 | 20 | 20 | 20 |
| | Silica Particles | 2 | 2 | 2 | 2 | 2 | 2 | 2 | 2 | 2 | 2 | 2 | 2 | 2 | 2 | 2 |
| | Polyurethane Resin Particles | 20 | 20 | 20 | 20 | 20 | 20 | 20 | 20 | 20 | 20 | 20 | 20 | 20 | 20 | 20 |
| | Isocyanate-Based Crosslinking Agent | 1 | 1 | 1 | 1 | 1 | 1 | 1 | 1 | 1 | 1 | 1 | 1 | 1 | 1 | 1 |
| Evaluation | Oleic Acid Resistance | B | A | A | A | A | B | A | B | A | A | A | A | B | A | C |
| | Cold-resistant Flexibility | B | B | A | A | A | A | A | B | B | A | A | A | A | A | C |
| 71 | 72 | 73 | 74 | 75 | 76 | 77 | 78 | 79 | 80 | 81 | 82 | 83 | 84 | 6 | | |
| Polyurethane Resin | | PUD2 | PUD3 | PUD4 | PUD5 | PUD6 | PUD7 | PUD8 | PUD9 | PUD10 | PUD11 | PUD12 | PUD13 | PUD14 | PUD15 | PUD1 |
| Formulation (part) | Resin Solid Fraction | 20 | 20 | 20 | 20 | 20 | 20 | 20 | 20 | 20 | 20 | 20 | 20 | 20 | 20 | 20 |
| | Silica Particles | 2 | 2 | 2 | 2 | 2 | 2 | 2 | 2 | 2 | 2 | 2 | 2 | 2 | 2 | 2 |
| | Polyurethane Resin Particles | 20 | 20 | 20 | 20 | 20 | 20 | 20 | 20 | 20 | 20 | 20 | 20 | 20 | 20 | 20 |
| | Oxazoline-based crosslinking Agent | 1 | 1 | 1 | 1 | 1 | 1 | 1 | 1 | 1 | 1 | 1 | 1 | 1 | 1 | 1 |

(continued)

| 71 | 72 | 73 | 74 | 75 | 76 | 77 | 78 | 79 | 80 | 81 | 82 | 83 | 84 | 6 | | |
|---|---|---|---|---|---|---|---|---|---|---|---|---|---|---|---|---|
| Evaluation | Oleic Acid Resistance | B | B | A | A | A | B | A | B | B | A | A | A | B | A | C |
| | Cold-resistant Flexibility | B | B | A | A | A | A | A | B | B | A | A | A | A | A | C |

As obvious from the results of Examples and Comparative Examples, the present invention can provide a polyurethane resin capable of satisfying both excellent cold-resistant flexibility and chemical resistance.

## Claims

1. A polyurethane resin comprising a polyol component and an isocyanate component, and satisfying the following (1) to (3):

   (1) The polyol component contains a polycarbonate diol component, and the isocyanate component contains a linear aliphatic isocyanate;
   (2) The polycarbonate diol component has a number-average molecular weight of 500 to 3000, and contains a diol-derived structure having 3 to 10 carbon atoms in the structure thereof; and
   (3) 10 mol% or more of the isocyanate component is a linear aliphatic isocyanate component having 4 to 10 carbon atoms.

2. The polyurethane resin according to claim 1, comprising a compound component having one or more active hydrogen groups and having a hydrophilic group, and which has an acid value of 5 to 40 mgKOH/g.

3. The polyurethane resin according to claim 1 or 2, wherein the proportion of the polycarbonate diol component in the polyol component is 50% by mass or more.

4. The polyurethane resin according to any one of claims 1 to 3, wherein the proportion of the linear aliphatic isocyanate component having 4 to 10 carbon atoms in the isocyanate component is 15 mol% or more.

5. The polyurethane resin according to any one of claims 1 to 4, further comprising a short-chain diol component and/or a short-chain diamine component.

6. The polyurethane resin according to any one of claims 1 to 5, wherein at least one selected from the group consisting of the polyol component, the isocyanate component, the short-chain diol component and the short-chain diamine component is composed of a plant based raw material.

7. The polyurethane resin according to claim 5 or 6, wherein the proportion as a molar ratio of the short-chain diol component is 0.1 to 3 times the amount of the polyol component.

8. The polyurethane resin according to any one of claims 1 to 7, wherein the glass transition temperature of the polyurethane resin is -50 to -10°C.

9. The polyurethane resin according to any one of claims 1 to 8, wherein a maximum value of tan$\delta$ of the polyurethane resin falls within a temperature range of -40 to -10°C.

10. The polyurethane resin according to any one of claims 1 to 9, wherein, when the resin is formed into a film, a physical property value of 100% modulus at -10°C of the resultant film is 20 MPa or less.

11. The polyurethane resin according to any one of claims 1 to 10, wherein, when the resin is formed into a film, a 100% modulus retention rate of the resultant film after immersed in olefinic acid at 70°C for 24 hours is 20% or more.

12. A paint comprising the polyurethane resin of any one of claims 1 to 11.

13. The paint according to claim 12, further comprising at least one selected from the group consisting of an isocyanate-based crosslinking agent, a carbodiimide-based crosslinking agent, an oxazoline-based crosslinking agent, and an epoxy-based crosslinking agent.

14. A structure comprising the polyurethane resin of any one of claims 1 to 11.

15. A structure comprising the paint of claim 12 or 13 in at least any of the surface or the inside thereof.

16. A synthetic artificial leather comprising the structure of claim 14 or 15.

## INTERNATIONAL SEARCH REPORT

International application No.
PCT/JP2019/019013

A. CLASSIFICATION OF SUBJECT MATTER
Int.Cl. C08G18/44(2006.01)i, C08G18/08(2006.01)i, C08G18/73(2006.01)i, C09D175/04(2006.01)i, D06N3/14(2006.01)i

According to International Patent Classification (IPC) or to both national classification and IPC

B. FIELDS SEARCHED

Minimum documentation searched (classification system followed by classification symbols)
Int.Cl. C08G18/00-18/87, C08L1/00-101/16, C09D1/00-201/10, D06N3/00-3/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 2016-125155 A (NICCA CHEMICAL CO., LTD.) 11 July 2016, claims, paragraphs [0001], [0051], column "examples" (for example, synthesis examples 3-4) (Family: none) | 1-16 |
| X | JP 2013-217006 A (NICCA CHEMICAL CO., LTD.) 24 October 2013, claims, paragraphs [0001], [0089], column "examples" (for example, synthesis examples 2-3) (Family: none) | 1-16 |
| X | JP 2010-180363 A (DAINICHISEIKA COLOR & CHEMICALS MFG. CO., LTD.) 19 August 2010, claims, paragraph [0001], column "examples" (including comparative examples) (Family: none) | 1-16 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 August 2019 (08.08.2019) | 20 August 2019 (20.08.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/019013

C (Continuation). DOCUMENTS CONSIDERED TO BE RELEVANT

| Category* | Citation of document, with indication, where appropriate, of the relevant passages | Relevant to claim No. |
|---|---|---|
| X | JP 2009-275173 A (DAINICHISEIKA COLOR & CHEMICALS MFG. CO., LTD.) 26 November 2009, claims, paragraph [0001], column "examples" (for example, synthesis examples 1-3, 5-6) (Family: none) | 1-16 |
| X | JP 2009-1713 A (DAINICHISEIKA COLOR & CHEMICALS MFG. CO., LTD.) 08 January 2009, claims, paragraph [0001], column "examples" (Family: none) | 1-16 |
| X | JP 2007-119749 A (DKS CO., LTD.) 17 May 2007, claims, paragraph [0001], column "examples" (for example, A-2, A-3, A-5, a-1, a-2, a-4) (Family: none) | 1-16 |
| X | JP 2-187477 A (BAYER AG.) 23 July 1990, claims, column "examples" (for example, example 4) & EP 365902 A2 & US 5177141 A, claims, example 4 | 1-16 |
| X | JP 5-239372 A (BAYER AG.) 17 September 1993, claims, paragraphs [0001], [0048], column "examples" (for example, table 2, 7) & US 5268416 A, claims, table 2, no. 7 | 1-16 |
| X | WO 2017/179291 A1 (DIC CORPORATION) 19 October 2017, claims, paragraph [0059], column "examples" (for example, example 5) & EP 3444286 A1 & US 2018/0142409 A1, claims, paragraph [0070], example 5 | 1-16 |
| X<br>A | JP 2014-105250 A (DAINICHISEIKA COLOR & CHEMICALS MFG. CO., LTD.) 09 June 2014, claims, paragraph [0001], column "examples" (Family: none) | 1, 3-16<br>2 |
| X<br>A | JP 2001-187811 A (DAINIPPON INK AND CHEMICALS, INCORPORATED) 10 July 2001, claims, paragraphs [0001], [0031], column "examples" (for example, synthesis example 4) (Family: none) | 1, 3-16<br>2 |
| X<br>A | JP 2004-352800 A (NIPPON POLYURETHANE INDUSTRY CO., LTD.) 16 December 2004, claims, paragraphs [0037], [0039], column "examples" (Family: none) | 1, 3-16<br>2 |
| P X | WO 2018/159359 A1 (SANYO CHEMICAL INDUSTRIES, LTD.) 07 September 2018, claims, paragraphs [0001], [0074], column "examples" (for example, example 7, comparative example 5) (Family: none) | 1-16 |
| P X | WO 2018/159228 A1 (TORAY INDUSTRIES, INC.) 07 September 2018, claims, paragraphs [0001], [0105], column "examples" (for example, reference examples 4, 10) & TW 201841978 A | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013108196 A